# EUROPEAN PATENT SPECIFICATION

(11) **EP 4 054 164 B1**
(45) Date of publication and mention of the grant of the patent: **08.11.2023**
(21) Application number: 22159249.6
(22) Date of filing: 28.02.2022
(51) Int. Cl.: H04M 9/02

(54) **INTERPHONE SYSTEM**
GEGENSPRECHANLAGE
SYSTÈME D'INTERPHONE

(30) Priority: 02.03.2021 JP 2021032840
(43) Date of publication of application: 07.09.2022
(73) Proprietor: Aiphone Co., Ltd., Nagoya-shi, Aichi 460-0004 (JP)
(72) Inventor: SHIMOMURA, Yuta, Nagoya-shi, 456-8666 (JP); HATTORI, Masashi, Nagoya-shi, 456-8666 (JP); FUJISHIMA, Kimiaki, Nagoya-shi, 456-8666 (JP); UNO, Ryoji, Nagoya-shi, 456-8666 (JP)
(74) Representative: Prüfer & Partner mbB Patentanwälte · Rechtsanwälte

(56) References cited:
- CN-B- 109 743 545
- US-B1- 8 780 201

## Description

### TECHNICAL FIELD

The disclosure relates to an interphone system used in a detached house or a multiple dwelling house when a visitor calls a dweller.

### RELATED ART

US 8 780 201 B1 discloses a doorbell communication system according to the preamble of claim 1.

Some conventional interphone systems used for calling a dweller by a visitor include a mute function (silent mode).

The mute function cancels a call sound to cause a calling by a visitor not to be recognized by a dweller (see, for example, JP H11-127248 A).

### SUMMARY OF THE INVENTION

While the function of canceling a call sound is effective because silence is provided when the dweller is asleep, a visitor is not recognized. Therefore, a function that allows recognizing who the visitor was has been desired.

Therefore, it is an object of the disclosure to provide an interphone system that automatically records a video image of a visitor during a setting period of a silent mode in which a call sound is not emitted.

In order to solve the above-described issue, an interphone system is provided according to claim 1.

With the configuration of claim 1, while the dweller is not aware of the presence of the visitor because the call sound is not emitted in the silent mode, the video image taken by the camera of the slave device is stored. Therefore, the visitor can be confirmed later, thus providing excellent convenience.

Further with the configuration of claim 1, even when the transition to the silent mode is performed, since the silent mode is automatically released when the set period is elapsed or the set time comes, forgetting the release can be avoided, thus providing excellent convenience.

Further with the configuration, while the dweller is not aware of the presence of the visitor because the call sound is not emitted in the silent mode, the video image taken by the camera of the slave device is stored. Therefore, the visitor can be confirmed later. Additionally, since the transition to the silent mode is automatically performed, and further, the silent mode is automatically released, the need for performing the setting operation every time is eliminated, thus providing excellent convenience.

According to a further embodiment, since the setting can be made for each day of the week, even when the time slot in which the operation in the silent mode is intended differs for each day of the week, it can be dealt with, thus providing excellent convenience.

According to a further embodiment, since the call sound is not emitted and the monitor does not become light in the silent mode state, the dweller is not aware of the call even when the dweller is present near the master device, thus allowing keeping a quiet state.

According to a further embodiment, since the current mode state can be recognized by the display state on the mode display section, the need for confirming by operating the operation section is eliminated.

According to the disclosure, while the dweller is not aware of the presence of the visitor because the call sound is not emitted in the silent mode, the video image taken by the camera of the slave device is stored. Therefore, the visitor can be confirmed later, thus providing excellent convenience.

### BRIEF DESCRIPTION OF THE DRAWINGS

Fig. 1 is a block diagram illustrating an exemplary interphone system according to the disclosure.
Fig. 2 is a function block diagram of a dwelling room master device.
Fig. 3 is an explanatory diagram of a time setting screen in a silent mode.

### DETAILED DESCRIPTION OF THE INVENTION

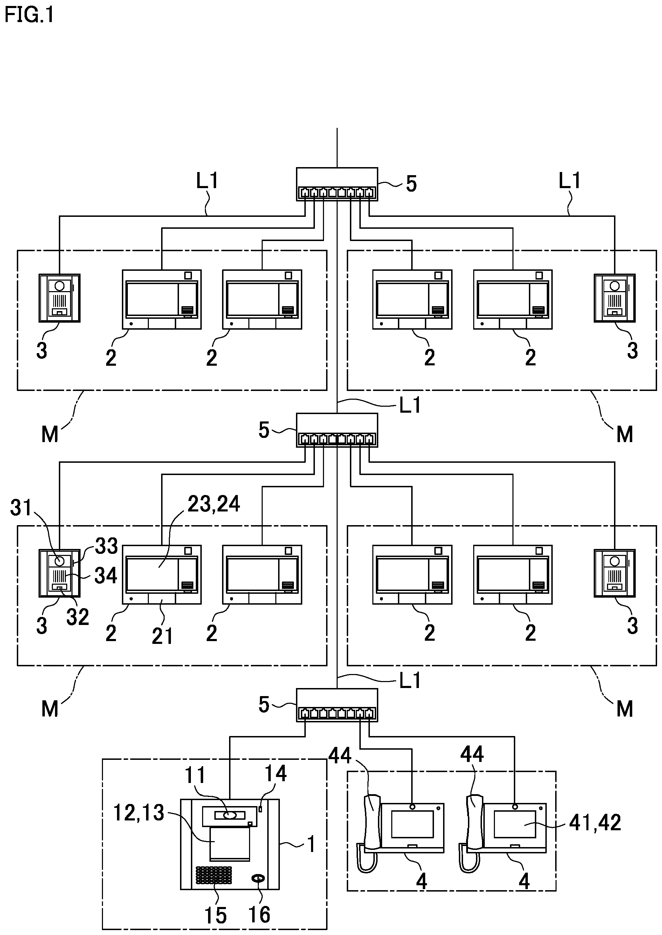

The following describes embodiments in which the disclosure is embodied in detail with reference to the drawings. Fig. 1 illustrates an exemplary interphone system according to the disclosure, and illustrate a multiple dwelling house interphone system installed in a multiple dwelling house. The multiple dwelling house interphone system includes a collective entrance machine 1, dwelling room master devices 2, entrance slave devices 3, management master devices 4, and the like. The collective entrance machine 1 is installed at an entrance of a multiple dwelling house and serves as a slave device for calling a dweller by a visitor. The dwelling room master devices 2 are installed in individual dwelling units and serve as master devices for responding the calling from the collective entrance machine 1. The entrance slave devices 3 are installed at entrances of the individual dwelling units and serve as slave devices for calling the dwellers. The management master devices 4 are installed in a manager room and serve as master devices for speaking with the dwellers and the like.

Reference character 5 are HUBs, the devices are mutually connected by a LAN via communication lines L1, and the communication between the devices are performed by an Internet Protocol (IP). By performing the communication between the devices by the IP, adding the dwelling room master device 2 and the like is facilitated. A configuration in which the two dwelling room master devices 2 are installed in each dwelling unit is illustrated. Reference characters M indicate dwelling units.

The collective entrance machine 1 includes a camera 11, an operation section 12, a display section 13, a microphone 14 and a speaker 15, a call button 16, and the like. The camera 11 obtains an image of a visitor. The operation section 12 is used for selecting or inputting a dwelling unit to be called. The display section 13 displays a calling destination and the like. The microphone 14 and the speaker 15 are used for speaking. The operation section 12 includes a touch panel, and is integrated with the display section 13.

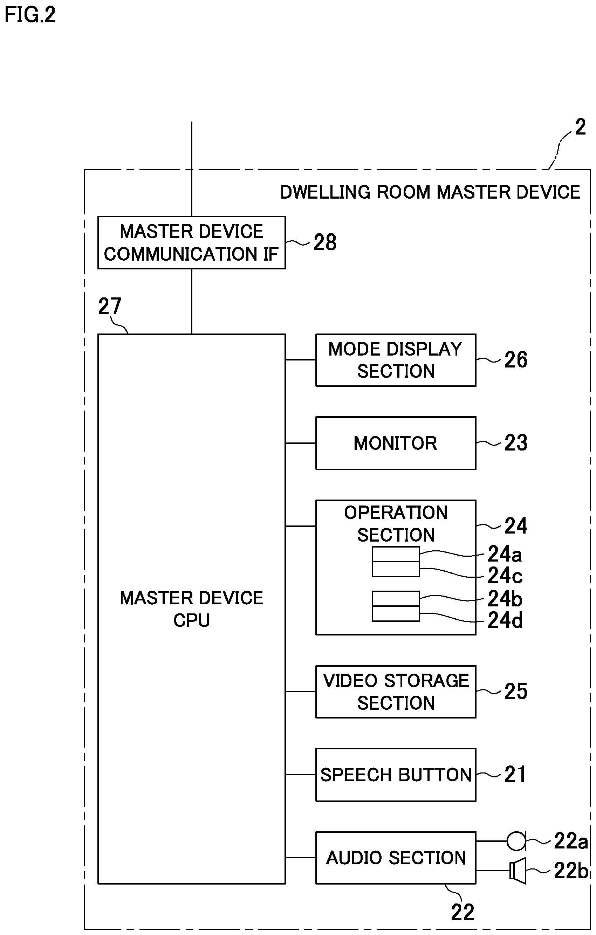

Fig. 2 is a block diagram of the dwelling room master device 2. The dwelling room master device 2 includes a speech button 21, an audio section 22, a monitor 23, an operation section 24, a video storage section 25, a mode display section 26, a master device CPU 27, a master device communication IF 28, and the like. The speech button 21 is used for a response operation to the calling. The audio section 22 includes a microphone 22a and a speaker 22b used for the speaking. The monitor 23 includes an LCD that displays a video image obtained by the camera 11 and various kinds of information. The mode display section 26 displays an operation mode. The master device CPU 27 controls the dwelling room master device 2. The master device communication IF 28 communicates with outside.

The operation section 24 includes a touch panel integrated with the monitor 23, and includes a mute setting button 24a for a transition to a silent mode, an automatic mute setting button 24b for an automatic transition to a silent mode state, and the like.

The mute setting button 24a is displayed together with a time setting section 24c. The time setting section 24c is an input section for setting a duration of the silent mode, and the silent mode state is automatically released when a set period is elapsed or a set time comes.

The automatic mute setting button 24b is displayed together with a schedule setting section 24d. The schedule setting section 24d is an operation section for setting a time slot of the transition to the silent mode for each day of the week.

The entrance slave device 3 includes a slave device camera 31 for obtaining an image of a visitor, a call button 32 used for calling a dweller, a microphone 33 and a speaker 34 used for speaking, and the like.

Operations of the interphone system configured as described above are as follows. Note that, since a call from the collective entrance machine 1 or the entrance slave device 3 in a normal mode, an operation of emitting a call sound by the dwelling room master device 2 receiving the call, an operation of displaying the video image taken by the camera 11 or the slave device camera 31 on the monitor 23, an operation of forming a speech path by the response operation, and the like are similar to those in the conventional system, the explanations are omitted. Here, setting and operations of the silent mode will be described.

The transition to the silent mode can be performed by a predetermined operation of the operation section 24. There are two methods of the transition to the silent mode, a transition by a manual operation of operating the mute setting button 24a and an automatic transition by operating the automatic mute setting button 24b as described below.

The manual operation is an operation in which the monitor 23 is caused to display the mute setting button 24a, and the displayed mute setting button 24a is touched, thereby performing the transition. At this time, when the duration (release time) has not been set, a period of continuing the silent mode or a time at which the silent mode is released is set from the time setting section 24c displayed together.

When the mute setting button 24a is turned on, the master device CPU 27 recognizes it and makes the transition to the silent mode, thus performing the silent mode operation. The mode display section 26 displays that the state is in the silent mode. For example, the LED is lighted.

In the silent mode state, the call sound is not emitted even when the call is made from the collective entrance machine 1 or the entrance slave device 3. A back light of the monitor 23 is not lighted. That is, the monitor 23 continues to be in a turn-off state, and does not become light.

However, when the calling operation is performed by the collective entrance machine 1, the camera 11 is activated, and the video image is transmitted to the dwelling room master device 2 and recorded by the video storage section 25. When the calling operation is performed by the entrance slave device 3, the slave device camera 31 is activated, and the video image is transmitted to the dwelling room master device 2 and recorded by the video storage section 25.

Note that even in the silent mode state, when the monitor 23 is touched, the back light is lighted and a predetermined operation screen is displayed while remaining in the silent mode state, thus allowing the operation similar to that in the normal mode state. When the release time or the duration has been set, the silent mode is automatically released when the time comes or the period is elapsed. However, when the release time or the duration has not been set, the silent mode is continued until a release operation is performed.

An automatic transition operation is performed by an operation of the automatic mute setting button 24b.

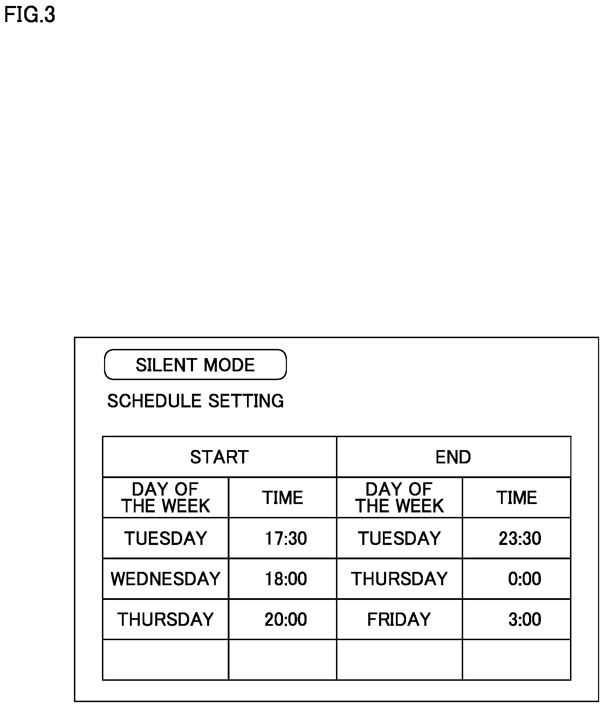

Fig. 3 illustrates the schedule setting section 24d as a setting screen for the automatic transition to the silent mode. When the automatic mute setting button 24b is displayed on the monitor 23 by a predetermined operation of the operation section 24, the schedule setting section 24d is displayed together. As illustrated in Fig. 3, a start time/end time of the silent mode state can be set (schedule setting) for each day of the week.

When the schedule setting has not been performed, a weekly schedule is set by the schedule setting section 24d at first. Here, the start time/end time of the silent mode is set for each day of the week. When the end time is a time on the next day, the day of the week on which the silent mode is ended is set to the next day of the week, and the setting in minutes is allowed.

While the setting from Tuesday to Thursday is illustrated here, the setting for a week (seven days) is allowed. In Fig. 3, for example, in the case of Tuesday, the silent mode is set from 17:30 to 23:30. In the case of Wednesday, the silent mode is set from 18:00 to 0:00 a.m. on Tuesday at which the date changes.

As described above, in the silent mode, the video image of the visitor taken by the camera 11 of the collective entrance machine 1 or the slave device camera 31 of the entrance slave device 3 is stored while the call sound is not emitted. Therefore, the dweller can confirm the visitor later, thus providing excellent convenience.

Even when the transition to the silent mode is performed, since the silent mode is automatically released when the set time comes or the set period is elapsed, the need for performing the release operation is eliminated, thus providing excellent convenience.

Further, in the setting of the automatic transition to the silent mode, since the transition to the silent mode is performed at the set time, and further, the silent mode is automatically released, the need for performing the setting operation every time is eliminated, thus providing excellent convenience.

Additionally, since the control of the automatic transition can be set for each day of the week, even when the time slot in which the operation in the silent mode is intended differs for each day of the week, the control of the automatic transition can deal with it, thus providing excellent convenience.

Since the call sound is not emitted and the monitor 23 does not become light in the silent mode state, the dweller is not aware of the call even when the dweller is present near the dwelling room master device 2, thus allowing keeping a quiet state.

Since the current mode state can be recognized by the display on the mode display section 26, the need for confirming by operating the operation section 24 is eliminated.

While the operation of the dwelling room master device 2 in the silent mode state in association with the calling operation of the collective entrance machine 1 or the entrance slave device 3 is described in the above-described embodiment, the management master device 4 also can set the silent mode, and the similar operation is performed.

While the multiple dwelling house interphone system has a configuration in which the communication between the devices is performed by the IP communication, the technique of the disclosure is applicable to a conventional configuration in which a controller to control the communication between the devices is disposed and the devices are mutually connected by a two-wire transmission line.

Further, while the case of the multiple dwelling house interphone system is described, the technique of the disclosure is applicable to an interphone system used for a detached house. In the detached house, a slave device is installed at an entrance, and a master device is installed in a dwelling unit.

## Claims

1. An interphone system comprising:
a slave device (1, 3) that includes a camera (11, 31) to obtain an image of a visitor, the slave device (1, 3) being for calling a dweller by a visitor; and
a master device (2) that includes a monitor (23) to display a video image obtained by the camera(11, 31), the master device (2) being for responding by the dweller, wherein
the master device (2) includes:
a video storage section (25) configured to record the video image obtained by the camera (11, 31); and
an operation control section (27) configured to control a silent mode operation, wherein
when the slave device (1, 3) receives a calling operation in the silent mode state, the camera (11, 31) is activated, and the video image is stored in the video storage section (25), **characterized in that**
the master device (2) further includes:
an automatic mute setting button (24b) configured to perform an automatic transition to the silent mode in which a call sound is not emitted and to further perform an automatic release of the silent mode; and
a schedule setting section (24d) for setting a time slot of the silent mode, wherein
the operation control section (27) is configured to perform a control of the transition to the silent mode in the time slot set by the schedule setting section (24d) when the automatic mute setting button (24b) is turned on.

2. The interphone system according to claim 1, wherein
the schedule setting section (24d) is configured to make a setting for each day of the week, and
the operation control section (27) is configured to control the time slot in which the transition to the silent mode is performed on a cycle of seven days.

3. The interphone system according to claim 1 or 2, wherein
the operation control section (27) is configured not to light a back light of the monitor (23) in the silent mode state even when the call is received.

4. The interphone system according to any one of claims 1 to 3, wherein
the master device (2) includes a mode display section (26) displaying that the state is in the silent mode.

## Patentansprüche

1. Ein Gegensprechsystem, umfassend:
eine Slave-Vorrichtung (1, 3), die eine Kamera (11, 31) umfasst, um ein Bild eines Besuchers zu erhalten, wobei die Slave-Vorrichtung (1, 3) zum Anrufen eines Bewohners durch einen Besucher dient; und
eine Master-Vorrichtung (2), die einen Monitor (23) umfasst, um ein durch die Kamera (11, 31) erhaltenes Videobild anzuzeigen, wobei die Master-Vorrichtung (2) zum Antworten durch den Bewohner dient, wobei
die Master-Vorrichtung (2) umfasst:
einen Videospeicherabschnitt (25), der dazu konfiguriert ist, das durch die Kamera (11, 31) erhaltene Videobild aufzuzeichnen; und
einen Betriebssteuerabschnitt (27), der dazu konfiguriert ist, einen Lautlosmodusbetrieb zu steuern, wobei
wenn die Slave-Vorrichtung (1, 3) einen Anrufbetrieb im Lautlosmoduszustand empfängt, die Kamera (11, 31) aktiviert wird und das Videobild in dem Videospeicherabschnitt (25) gespeichert wird, **dadurch gekennzeichnet, dass**
die Master-Vorrichtung (2) ferner umfasst:
eine automatische Stummschaltungs-Einstelltaste (24b), die dazu konfiguriert ist, einen automatischen Übergang in den Lautlosmodus durchzuführen, in dem kein Anrufton emittiert wird, und ferner eine automatische Freigabe des Lautlosmodus durchzuführen,
einen Zeitplaneinstellabschnitt (24d) zum Einstellen eines Zeitschlitzes des Lautlosmodus, wobei
der Betriebssteuerabschnitt (27) dazu konfiguriert ist, eine Steuerung des Übergangs in den Lautlosmodus in dem durch den Zeitplaneinstellabschnitt (24d) eingestellten Zeitschlitz durchzuführen, wenn die automatische Stummschaltungs-Einstelltaste (24b) eingeschaltet wird.

2. Die Gegensprechanlage nach Anspruch 1, wobei
der Zeitplaneinstellabschnitt (24d) dazu konfiguriert ist, eine Einstellung für jeden Tag der Woche vorzunehmen, und
der Betriebssteuerabschnitt (27) dazu konfiguriert ist, den Zeitschlitz, in dem der Übergang in den Lautlosmodus durchgeführt wird, in einem Zyklus von sieben Tagen zu steuern.

3. Die Gegensprechanlage nach Anspruch 1 oder 2, wobei
der Betriebssteuerabschnitt (27) dazu konfiguriert ist, ein Hintergrundlicht des Monitors (23) im Lautlosmoduszustand nicht zu einzuschalten, selbst wenn der Anruf empfangen wird.

4. Die Gegensprechanlage nach einem der Ansprüche 1 bis 3, wobei
die Master-Vorrichtung (2) einen Modusanzeigeabschnitt (26) umfasst, der anzeigt, dass der Zustand im Lautlosmodus ist.

## Revendications

1. Un système interphone comprenant :
un dispositif esclave (1, 3) qui comprend une caméra (11, 31) pour obtenir une image d'un visiteur, le dispositif esclave (1, 3) étant destiné à appeler un habitant par un visiteur ; et
un dispositif maître (2) qui comprend un moniteur (23) pour afficher une image vidéo obtenue par la caméra (11, 31), le dispositif maître (2) étant destiné à répondre par l'habitant, dans lequel
le dispositif maître (2) comprend :
une section de stockage vidéo (25) configurée pour enregistrer l'image vidéo obtenue par la caméra (11, 31) ; et
une section de commande d'opération (27) configurée pour commander une opération en mode silencieux, dans lequel
lorsque le dispositif esclave (1, 3) reçoit une opération d'appel dans l'état de mode silencieux, la caméra (11, 31) est activée, et l'image vidéo est stockée dans la section de stockage vidéo (25), **caractérisé en ce que**
le dispositif maître (2) comprend en outre :
un bouton de mise en sourdine automatique (24b) configuré pour effectuer une transition automatique vers le mode silencieux dans lequel un son d'appel n'est pas émis, et pour effectuer en outre une libération automatique du mode silencieux
une section de réglage de programme (24d) pour régler un intervalle de temps du mode silencieux, dans lequel
la section de commande d'opération (27) est configurée pour effectuer une commande de la transition vers le mode silencieux dans l'intervalle de temps réglé par la section de réglage de programme (24d) lorsque le bouton de mise en sourdine automatique (24b) est activé.

2. Le système interphone selon la revendication 1, dans lequel
la section de réglage de programme (24d) est configurée pour effectuer un réglage pour chaque jour de la semaine, et
la section de commande d'opération (27) est configurée pour commander l'intervalle de temps dans lequel la transition vers le mode silencieux est effectuée sur un cycle de sept jours.

3. Le système interphone selon la revendication 1 ou 2, dans lequel
la section de commande d'opération (27) est configurée pour ne pas allumer une lumière arrière du moniteur (23) dans l'état de mode silencieux même lorsque l'appel est reçu.

4. Le système interphone selon l'une quelconque des revendications 1 à 3, dans lequel
le dispositif maître (2) comprend une section d'affichage de mode (26) affichant que l'état est dans le mode silencieux.
